(19) Europäisches Patentamt
European Patent Office
Office européen des brevets

(11) **EP 1 191 163 B1**

(12) **FASCICULE DE BREVET EUROPEEN**

(45) Date de publication et mention
de la délivrance du brevet:
**19.10.2011 Bulletin 2011/42**

(51) Int Cl.:
*E04C 5/065* (2006.01)  *E04C 5/06* (2006.01)
*F16L 9/08* (2006.01)

(21) Numéro de dépôt: **01402458.2**

(22) Date de dépôt: **25.09.2001**

(54) **Cage de ferraillage pour un élément en béton armé.**

Armierungskorb für Stahlbetonelemente

Reinforcing cage for concrete elements

(84) Etats contractants désignés:
**AT BE CH CY DE DK ES FI FR GB GR IE IT LI LU MC NL PT SE TR**

(30) Priorité: **26.09.2000 FR 0012236**

(43) Date de publication de la demande:
**27.03.2002 Bulletin 2002/13**

(73) Titulaire: **SOCIETE CIVILE DE BREVETS MATIERE 15000 Aurillac (FR)**

(72) Inventeur: **Matiere, Marcel 15000 Aurillac (FR)**

(74) Mandataire: **Catherine, Alain et al Cabinet HARLE et PHELIP 14-16, rue Ballu 75009 Paris (FR)**

(56) Documents cités:
**WO-A-92/03623      CH-A- 666 929
FR-A- 1 226 086      FR-A- 2 708 969
US-A- 4 139 670**

## Description

L'invention a pour objet une cage de ferraillage pour un élément en béton armé et couvre également les éléments en béton comportant une cage de ce type.

L'invention s'applique spécialement à la réalisation d'éléments préfabriqués en béton armé.

Dans le domaine du bâtiment et des travaux publics, on utilise depuis longtemps des éléments de construction réalisés en béton moulé et dans lesquels est noyée une armature métallique.

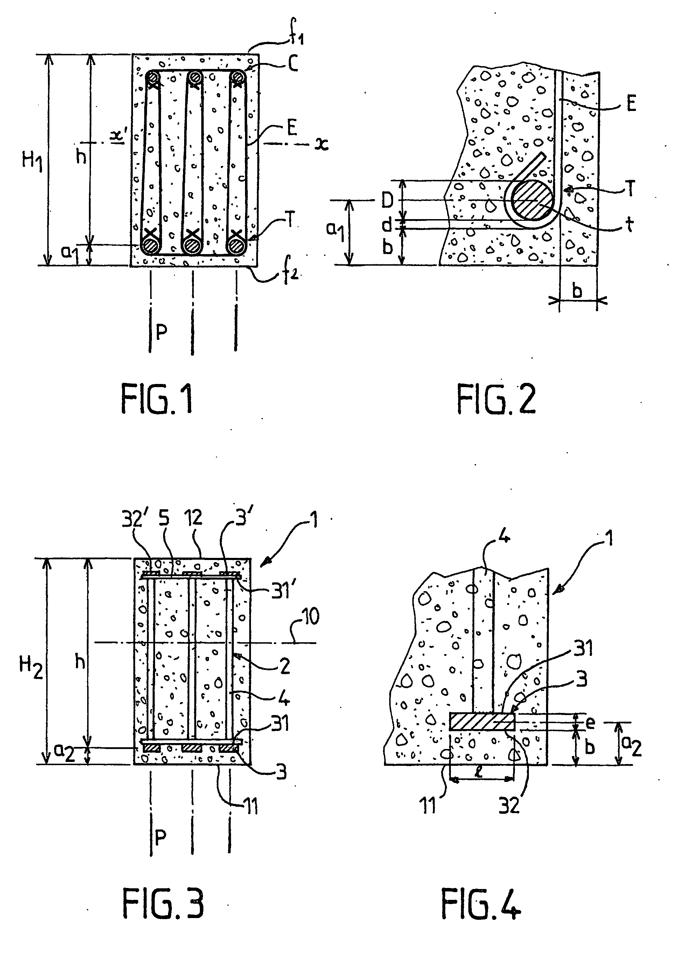

On sait que le principe du béton armé consiste à combiner les qualités du béton et des armatures métalliques. Habituellement, comme l'indique la figure 1 qui illustre le cas simple d'une pièce à section droite rectangulaire, soumise à une charge P, on considère qu'une pièce en béton armé comporte, de part et d'autre d'un axe neutre x'x, deux parties soumises respectivement à des efforts de compression et des efforts de traction. Ces derniers sont repris par une nappe de barres longitudinales T dont la section transversale est déterminée en fonction des efforts appliqués et, dans le cas d'une pièce soumise à la flexion, de la distance (h) entre la face de parement f1 de la partie comprimée et le centre de gravité des armatures tendues T.

D'autre part, il est nécessaire de placer également, dans la partie comprimée, une nappe de barres longitudinales qui sont reliées aux barres tendues par des armatures transversales appelées étriers, permettant, en particulier, de résister aux efforts tranchants.

D'une façon générale, l'ensemble du ferraillage d'un élément en béton présente donc la forme d'une cage constituée de deux nappes T, C de barres longitudinales respectivement actives et passives, reliées entre elles par des étriers E.

Le plus souvent, les barres des deux nappes d'armatures sont superposées dans des plans parallèles à la direction des efforts et écartés les uns des autres, la cage étant ainsi constituée de plusieurs sections parallèles reliées entre elles par des barres perpendiculaires de solidarisation, chaque section comprenant deux barres ou groupes de barres reliées par des étriers.

Pour maintenir des prix relativement bas, les barres d'armatures sont produites en très grandes quantités dans des installations spécialisées qui sont prévues pour réaliser des barres rondes de différentes sections, celles-ci pouvant être torsadées ou crantées pour améliorer l'adhérence.

L'utilisateur dispose donc, sur catalogue, d'un nombre limité de types de barres de sections différentes et, pour obtenir la section déterminée par le calcul, il est souvent nécessaire d'associer entre elles deux ou trois barres accolées.

D'autre part, la réglementation impose de laisser une distance minimale d'enrobage entre une barre d'armature et la face de parement correspondante de la pièce, pour éviter la corrosion et l'éclatement du béton. Il faut donc positionner avec précision les armatures à l'intérieur de la pièce moulée, en tenant compte du diamètre des étriers qui entourent les barres.

Lorsque le béton est moulé sur place, on pose, tout d'abord, des coffrages appelés banches qui déterminent les deux faces de parement de la paroi et entre lesquels est montée la cage de ferraillage. On coule ensuite le béton et il faut évidemment attendre la prise et le durcissement de celui-ci pour enlever les coffrages et commencer la réalisation d'une partie suivante du bâtiment. Pour une dalle, on pose la cage sur un coffrage puis l'on coule le béton.

Pour simplifier la construction et obtenir, d'autre part, une excellente qualité de surface, on a proposé, depuis longtemps, d'utiliser des éléments préfabriqués réalisés à l'avance dans un atelier spécialement équipé à cet effet. Une telle technique est valable, en particulier, lorsque l'on doit réaliser un grand nombre de pièces identiques, par exemple dans le domaine du bâtiment.

A cet effet, on a mis au point des techniques dites de préfabrication lourde qui permettent par exemple de réaliser des éléments de façade ou de plancher standardisés. On dispose en effet, pour la construction d'un immeuble, de grues de forte capacité qui permettent de mettre en place des éléments de grandes dimensions.

Cependant, les techniques de préfabrication lourde se sont développées également dans le domaine des travaux publics car on dispose maintenant d'engins mobiles de levage permettant de manipuler sur le site des pièces pesant plusieurs tonnes.

Par exemple, l'inventeur a développé, depuis 1981, une technique originale de construction de conduits enterrés sous remblai qui peuvent constituer des ouvrages d'art d'une certaine importance pour la circulation routière ou ferroviaire.

Dans cette technique, décrite, en particulier, dans le brevet européen N°0.081.402, le conduit est constitué d'anneaux juxtaposés comprenant chacun, en section transversale, deux éléments de côté formant des piédroits et un élément supérieur incurvé formant une voûte reposant sur les extrémités desdits piédroits.

Si l'on donne à chaque anneau une longueur limitée, par exemple à trois mètres, les éléments correspondant peuvent être placés en long sur une remorque routière et être transportés éventuellement sur une longue distance entre l'usine de préfabrication et le site de construction. En effet, les éléments peuvent être standardisés et il est alors rentable de construire une usine équipée de moules qui pourront être utilisés pour réaliser un grand nombre d'ouvrages jusqu'à des distances parfois importantes de l'usine.

Pour réaliser le revêtement d'une galerie souterraine, on a également proposé, dans le document FR-A-2 708 969, de placer le long de la paroi de l'excavation, un tronçon d'armature métallique constitué d'une structure monolithique tridimensionnelle en métal déployé, qui est ensuite enrobée dans du béton projeté.

Ce revêtement est réalisé progressivement en commençant par les parties basses du tronçon et nécessite donc l'utilisation d'un béton à prise rapide qui, en outre, contient de l'air du fait qu'il est projeté.

Un tel procédé n'est donc pas prévu pour réaliser des éléments préfabriqués ou moulés en place dans un coffrage. De plus, la structure autoportante en métal déployé décrite dans ce document, ne se comporte pas comme une cage de ferraillage d'un élément moulé coopérant avec le béton et pouvant être calculée de façon classique, pour permettre à l'élément en béton armé ainsi réalisé, de résister aux efforts appliqués.

En particulier, pour que les armatures travaillent dans les conditions prévues par le calcul, il faut qu'elles soient positionnées avec précision à l'intérieur de la pièce moulée.

Lorsque l'on réalise des pièces préfabriquées en grand nombre, les armatures sont préparées à l'avance dans des usines spécialisées et livrées à l'atelier de préfabrication. La cage de ferraillage d'un élément préfabriqué doit donc présenter une rigidité suffisante pour pouvoir être manipulée et positionnée à l'intérieur du coffrage.

Pour assurer la solidarisation des différentes sections d'une cage d'armature, les barres longitudinales sont généralement ligaturées ou bien soudées avec les étriers.

La réalisation des cages d'armature est donc une opération assez délicate qui doit être réalisée par un personnel spécialisé, ce qui augmente sensiblement le coût global d'un élément préfabriqué, par rapport au prix de revient des barres métalliques.

Par ailleurs, les possibilités de réalisation dépendent, évidemment, du poids des pièces et des possibilités de levage.

La technique de réalisation d'ouvrages enterrés décrite, en particulier, dans le brevet EP-0.081.402, permet d'utiliser, des pièces particulièrement minces par rapport à leur portée. Par exemple, les capacités des grues mobiles que l'on peut utiliser actuellement sur les chantiers de travaux publics permettent de donner aux éléments supérieurs une portée pouvant dépasser 10 mètres.

Une telle technique de préfabrication lourde permet de réaliser rapidement et économiquement des ouvrages d'art assez importants mais le coût de fabrication et de transport des éléments préfabriqués intervient pour une grande part dans le prix de revient de l'ouvrage.

L'invention a pour objet, sans remettre en cause le calcul des armatures et leur disposition générale, de réaliser un nouveau type de cage de ferraillage qui permet, notamment de réduire le coût des éléments préfabriqués et d'augmenter, à poids égal, les dimensions des pièces que les engins de levage habituels permettent de manipuler.

L'invention s'applique spécialement à la réalisation d'ouvrages constitués d'éléments préfabriqués incurvés du type décrit dans le brevet précédent EP-0.081.402. Toutefois, il est apparu que les cages de ferraillage ainsi réalisées présentaient également des avantages pour d'autres types d'éléments et, même, pour des pièces en béton moulées sur place.

L'invention concerne donc, d'une façon générale, une cage de ferraillage pour un élément en béton armé ayant deux faces de parement écartées de part et d'autre d'un axe neutre, entre lesquelles est noyée une cage de ferraillage comprenant au moins deux armatures longitudinales, respectivement active et passive, sensiblement parallèles, respectivement, aux deux faces de parement et constituées chacune d'une nappe de barres longitudinales ayant, en section transversale, une aire déterminée en fonction des efforts à supporter en service, et une armature transversale constituée d'une pluralité d'étriers de liaison entre les barres opposées des deux nappes, respectivement active et passive.

Conformément à l'invention, chaque barre d'armature longitudinale est constituée d'un fer plat métallique à section rectangulaire ayant une largeur et une épaisseur déterminées de façon à assurer l'aire nécessaire à la résistance, avec deux faces planes, respectivement une face externe tournée vers la face de parement correspondante et une face interne tournée vers l'axe neutre et les étriers de liaison formant l'armature transversale sont constitués d'éléments de bandes minces métalliques s'étendant uniquement entre les faces internes des barres longitudinales opposées, les faces en regard des bandes plates constituant lesdites barres longitudinales et les étriers, étant appliquées et soudées l'une sur l'autre.

Selon une autre caractéristique particulièrement avantageuse, l'écartement entre les fers plats constituant les armatures longitudinales, respectivement active et passive, est déterminé en fonction des efforts appliqués et chaque face de parement est placée à une distance minimale d'enrobage de la face externe du fer plat longitudinal correspondant, de façon à donner à l'élément en béton l'épaisseur juste nécessaire à la résistance.

Une telle cage de ferraillage reste de conception classique et comprend donc au moins deux sections d'armatures centrées dans des plans orthogonaux aux faces de l'élément et reliées par des barres de solidarisation dites filants. Selon l'invention chaque section comprend au moins deux bandes plates longitudinales écartées l'une de l'autre et reliées entre elles par des filants constitués de bandes plates qui coupent transversalement lesdits fers plats longitudinaux et sont soudés sur les faces internes de ceux-ci.

Dans un mode de réalisation préférentiel, les armatures transversales de maintien de l'écartement comprennent au moins une bande ondulée, soudée alternativement sur les faces internes des deux fers plats longitudinaux correspondants des deux nappes, respectivement active et passive.

Dans un autre mode de réalisation, l'armature transversale comprend une série d'éléments séparés constitués chacun d'une portion de bande ayant deux extrémités coudées et soudées respectivement sur les faces internes des deux fers plats longitudinaux.

L'invention s'applique spécialement à la réalisation d'une cage de ferraillage pour un élément en béton armé ayant deux faces incurvées sensiblement parallèles. Dans ce cas, les fers plats longitudinaux sont incurvés de façon que leurs faces externes soient parallèles, respectivement, aux faces de parement correspondantes de l'élément.

L'invention couvre également un élément en béton armé muni d'une telle cage d'armature et comprenant, de façon connue, deux régions, respectivement active et passive, de part et d'autre d'un axe neutre. Chaque barre longitudinale de la cage d'armature est alors constituée d'un fer plat ayant une face externe parallèle à la face de parement correspondante de l'élément et écartée de celle-ci d'une distance minimale d'enrobage (b). De la sorte, l'épaisseur (H) de l'élément correspondant à la distance entre les faces de parement, respectivement active et passive peut être limitée à la valeur :

$$H = h + b + e/2,$$

(e) étant l'épaisseur du plat longitudinal actif et (h) étant le bras de levier entre le centre de gravité dudit plat et la face de parement passive de l'élément.

L'invention couvre aussi un procédé de réalisation d'un élément moulé en béton armé dans lequel, pour réaliser les armatures longitudinales, on utilise des barres plates à section droite rectangulaire ayant une largeur et une épaisseur déterminées de façon à assurer l'aire nécessaire à la résistance, lesdites barres plates étant positionnées de la façon prévue pour les armatures, respectivement active et passive et reliés entre eux par une armature transversale comprenant au moins un élément en forme de ruban, soudé alternativement sur les faces internes, tournées l'une vers l'autre, desdits fers plats. La cage de ferraillage ainsi formée est alors placée dans un moule définissant les deux faces de parement dont l'écartement est déterminé de façon à donner à l'élément moulé l'épaisseur juste nécessaire pour maintenir une distance minimale d'enrobage entre la face externe de chaque armature longitudinale et la face de parement correspondante.

Mais l'invention sera mieux comprise par la description suivante de certains modes de réalisation particuliers donnés à titre d'exemple et représentés sur les dessins annexés.

La figure 1 est un schéma de principe du mode de réalisation classique d'une pièce en béton armé.
La figure 2 est une vue de détail à échelle agrandie de la figure 1.
La figure 3 est un schéma de principe d'une pièce en béton armé selon l'invention.
La figure 4 est une vue de détail, à échelle agrandie, de la figure 3.

La figure 5 est une vue partielle, en perspective, d'une cage de ferraillage selon l'invention.
La figure 6 montre, en coupe transversale, une cage de ferraillage pour un élément préfabriqué incurvé.
La figure 7 est une vue partielle en coupe transversale suivant la ligne I,I de la figure 6.
La figure 8 montre une variante de réalisation des étriers.

Comme on l'a indiqué, la figure 1 montre la disposition classique des armatures d'un élément en béton comportant deux nappes de barres longitudinales C, T, reliées par des étriers E. On sait que, habituellement, les étriers E sont constitués de fils de diamètre non négligeable, tournant autour des barres longitudinales de la façon indiquée sur la figure 2 qui est une vue de détail, à échelle agrandie, de la figure 1.

Étant donné que les armatures métalliques doivent être maintenues écartées de la face de parement correspondante d'une épaisseur minimale d'enrobage (b), la distance entre le centre de gravité d'une barre longitudinale et la face de parement correspondante est donc :

$$a1 = D/2 + d + b$$

D étant le diamètre de l'armature, d le diamètre de l'étrier et b l'épaisseur d'enrobage minimale.

Or on sait que, dans le cas, par exemple, d'une pièce soumise à la flexion, c'est le bras de levier (h), c'est à dire la distance entre le centre de gravité des armatures tendues et la face de parement comprimée, qui intervient dans le calcul de résistance. La couche externe de béton, le long de la face de parement, sert uniquement à protéger les armatures. L'inventeur a donc eu l'idée qu'en diminuant l'épaisseur de cette couche externe, il serait possible de réduire l'épaisseur totale H de l'élément et, par conséquent, son poids et la quantité de béton à utiliser.

Pour atteindre ce but, il fallait remettre en cause les idées généralement admises pour la réalisation des cages de ferraillage.

En effet, alors que jusqu'à présent, il semblait normal et, même, inévitable, d'utiliser les fers ronds à béton que l'on trouve habituellement dans le commerce, l'inventeur s'est avisé que l'évolution récente des techniques de la métallurgie avait fait baisser les prix des fers plats et que la section transversale nécessaire à la résistance pouvait être obtenue en utilisant des plats minces reliés par des bandes soudées sur leurs faces internes en regard, de telle sorte que l'épaisseur globale de la cage et, par conséquent, celle de l'élément en béton, puisse être sensiblement réduite.

La figure 3, qui est un schéma de principe analogue à celui de la figure 1, montre un exemple de ferraillage selon l'invention dans le cas d'un élément en béton 1 à section rectangulaire ayant deux faces de parement, respectivement une face tendue 11 et une face comprimée 12. Comme on l'a indiqué, chaque nappe d'armatures longitudinales comprend au moins un fer plat 3 ayant une section transversale rectangulaire dont l'aire est déterminée par le calcul de la même façon que pour chaque barre ronde (T) de la figure 1.

De même, les barres passives (C) de la figure 1 sont remplacées par des fers plats 3'.

D'autre part, les étriers sont constitués par des bandes minces soudées sur les faces 31, 31' des fers plats longitudinaux 3, 3' tournées vers l'intérieur de la pièce.

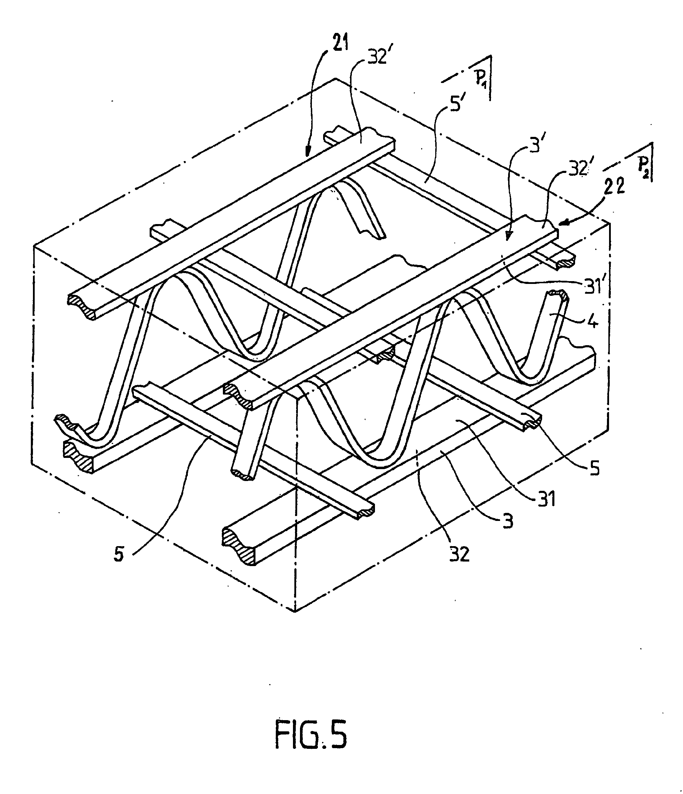

De façon particulièrement avantageuse, chaque étrier 4 peut être constitué d'une bande ondulée dont les sommets viennent au contact, alternativement, avec les faces internes 31, 31' des deux fers plats 3, 3' et sont soudés sur celles-ci, de la façon représentée sur la figure 5.

Comme habituellement, la cage de ferraillage 2 est constituée de plusieurs sections 21, 22... centrées dans des plans parallèles (P1, P2...) orthogonaux à l'axe neutre 10 de la pièce 1. Ces différentes sections sont reliées entre elles par des barres de solidarisation parallèles à l'axe neutre 10, qui sont avantageusement constituées de barres plates ou filants 5, 5' soudées respectivement sur les faces internes 31, 31', respectivement des deux fers plats longitudinaux 3, 3'. Ces barres plates 5, 5' passent entre les sommets de la bande ondulée 4 soudés sur les mêmes faces internes 31, 31'.

Dans une cage de ferraillage ainsi réalisée, les étriers 4 s'étendent donc uniquement entre les faces internes des fers plats longitudinaux et il en résulte que, comme le montre la figure 4, la distance entre la face externe 32, 32' de chaque fer plat longitudinal 3, 3' et la face de parement correspondante 11, 12 de la pièce 1 doit seulement être égale à la distance minimale d'enrobage (b).

La distance (a2) entre le centre de gravité des barres tendues 3 d'épaisseur (e) et la face de parement correspondante 11 est alors :

$$a2 = b + e/2$$

Si l'on compare cette disposition à celle de la figure 2, il apparaît que cette distance a2 est inférieure à la distance précédente a1 puisque l'on supprime l'épaisseur (d) des étriers E et que l'épaisseur (e) d'un plat 3 est inférieure au diamètre D d'une barre ronde de même aire transversale.

Pour un même bras de levier (h) correspondant aux efforts appliqués, la hauteur totale de la pièce,

$$H2 = h + a2$$

est donc réduite.

A titre d'exemple, la distance minimale d'enrobage étant de 30 mm, si l'on remplace une barre ronde de diamètre 14 mm associée à des étriers en fils de 8 mm par un plat de section équivalente 25x6, la distance a1 était de 45 mm dans la disposition classique et la distance a2 sera seulement de 30 mm dans la disposition selon l'invention.

Pour un même bras de levier 4 entre l'axe des barres tendues et la face de parement comprimée, l'épaisseur de la poutre est donc diminuée de 15 mm à résistance égale.

Bien entendu, il suffit également de laisser une distance minimale d'enrobage (b) entre les faces supérieures 32' des barres comprimées 3' et la face de parement correspondante 12 de la pièce.

L'épaisseur de béton peut ainsi être réduite au niveau de chaque face de parement.

Il est à noter que la diminution d'épaisseur de l'élément est proportionnellement plus sensible pour des pièces ayant déjà une épaisseur assez faible par rapport à leur portée comme dans le cas des éléments incurvés que l'on utilise pour réaliser la partie supérieure d'un conduit enterré selon la technique décrite dans le brevet EP-0.081.402.

Une diminution, par exemple de 20 mm, de l'épaisseur de chaque élément préfabriqué peut donc se traduire par une économie importante, même pour la réalisation d'un seul ouvrage.

D'une façon générale, l'invention ne remet donc pas en cause la conception et le calcul de la cage de ferraillage, le positionnement et les dimensions, en section transversale, des armatures, étant déterminés de façon classique en appliquant les méthodes habituelles de calcul, compte tenu du profil de la pièce en béton à réaliser et des contraintes appliquées.

Il est à noter, cependant, que l'utilisation de barres plates métalliques comme armatures principales permet de réaliser des cages de ferraillage de formes très variées, de tels plats pouvant être formés facilement et, éventuellement, réalisés en série.

Par exemple, pour améliorer l'effet d'ancrage dans le béton, les extrémités des barres longitudinales sont habituellement recourbées en forme de crosses dont le rayon de courbure dépend du diamètre de la barre.

Les fers plats utilisés, selon l'invention, pour réaliser les barres d'armatures pourront facilement être repliés à leurs extrémités, en conservant le même rapport entre le rayon de courbure de la crosse ainsi formée et l'épaisseur du fer plat. Comme cette épaisseur est plus faible que le diamètre d'une barre ronde équivalente, l'encombrement de la crosse sera diminué, ce qui peut faciliter la réalisation de la cage.

De même, les bandes métalliques 4 qui constituent les étriers de liaison entre les fers plats longitudinaux 3, 3' peuvent être facilement conformées, par exemple de façon à résister dans les meilleures conditions aux efforts tranchants.

En outre, compte tenu de l'épaisseur relativement faible des fers plats utilisés, ces derniers pourront être livrés à l'atelier de fabrication des armatures sous forme de bobines, les plats étant simplement déroulés et redressés sur place en fonction des besoins.

Par ailleurs, une cage de ferraillage selon l'invention est plus facile à réaliser qu'une cage classique.

En effet, dans la technique classique, il n'existe que des contacts quasi ponctuels entre les barres rondes et les étriers. Les liaisons entre les différents éléments pour constituer un ensemble solidaire sont réalisées soit par ligature soit, point par point, par soudure à l'arc et ces opérations sont assez longues et coûteuses.

Dans le cas de l'invention, au contraire, les différents éléments du ferraillage sont tous constitués de bandes plates dont les faces en regard sont appliquées l'une sur l'autre et peuvent être facilement soudées, par exemple à la pince. La réalisation d'une cage d'armature et donc plus facile et nécessite un personnel moins spécialisé. Il est ainsi possible de réduire non seulement la quantité de béton à utiliser mais aussi le coût de fabrication de la cage de ferraillage et le coût global d'un élément préfabriqué selon l'invention peut donc être sensiblement diminué.

Les avantages apportés par l'invention compensent donc largement l'augmentation du prix des fers utilisés dans une cage selon l'invention, par rapport à une cage classique constituée de barres rondes.

D'ailleurs, si les fers ronds à béton constituent un produit de grande consommation dont le prix est relativement faible, on ne dispose, sur le marché, que de produits standardisés. Après avoir déterminé la section d'acier requise pour encaisser les contraintes appliquées, on est donc obligé, dans la conception du ferraillage, de tenir compte des sections de barres dont on peut disposer en associant, par exemple, plusieurs barres pour obtenir la section transversale souhaitée.

Dans le cas de l'invention où l'on utilise des plats métalliques qui peuvent être obtenus économiquement, par exemple par refendage de tôles, il est possible de se procurer des plats dont l'aire, en section droite, correspond exactement à la section d'acier déterminée par le calcul et la réalisation d'une cage est plus simple.

D'autre part, l'invention met à profit l'évolution continuelle des techniques de fabrication des tôles qui ont permis de réduire considérablement les coûts de fabrication et, en outre, d'obtenir une très grande variété de produits ayant des caractéristiques structurelles très diverses.

En particulier, il est possible maintenant, de réaliser économiquement des tôles d'aciers à haute limite élastique et l'utilisation de plats obtenus à partir de telles tôles permettra de diminuer, à résistance égale, la quantité d'acier nécessaire au ferraillage. En outre, il est également possible d'utiliser des aciers ayant une limite élastique parfaitement adaptée aux caractéristiques du béton et, ainsi, de diminuer les risques de fissuration.

De plus, on sait que les fers ronds à béton sont particulièrement sensibles aux risques de corrosion, ce qui justifie une épaisseur d'enrobage relativement importante. Les avantages apportés par l'invention, permettent, en revanche, d'envisager l'utilisation d'aciers résistant mieux à la corrosion, ce qui permettrait de diminuer encore l'épaisseur d'enrobage nécessaire et, par conséquent, l'épaisseur globale de l'élément en béton.

D'ailleurs, le terme « fer plat » utilisé dans la présente description correspond au vocabulaire usuel mais on peut utiliser, selon l'invention, comme armature tout type de barre plate ayant la résistance requise.

Il est à noter, d'autre part, que, pour une même section transversale, le périmètre d'un plat rectangulaire est plus grand que celui d'une barre ronde. L'invention permet donc d'augmenter l'adhérence entre les armatures et le béton.

De toutes façons, pour augmenter l'adhérence, on peut envisager, lors de la fabrication des plats, de réaliser des parties crantées, comme pour les ronds à béton.

D'autre part, les plats constituant les armatures ou bien la tôle à partir de laquelle ils sont formés peuvent être soumis à un traitement de surface permettant d'améliorer la résistance à la corrosion et/ou l'adhérence.

Comme on l'a indiqué, l'invention s'applique spécialement à la réalisation d'éléments préfabriqués incurvés utilisés, par exemple, pour constituer la voûte d'un passage enterré sous remblai.

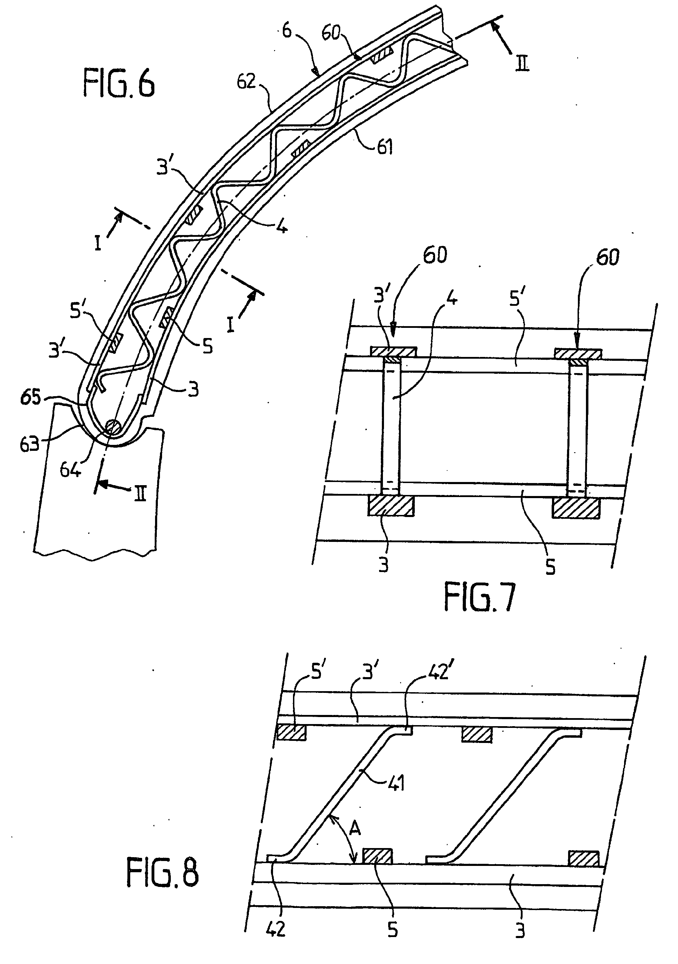

De la façon décrite dans le brevet EP-0.081.402, un tel élément, représenté en coupe transversale sur la figure 6, comprend deux faces de parement incurvées, respectivement, une face concave d'intrados 61 et une face convexe d'extrados 62 qui ont une forme cylindrique à génératrices parallèles à un axe longitudinal de l'élément, perpendiculaire au plan de la figure.

De façon avantageuse, chaque extrémité 63 de l'élément présente une face arrondie convexe susceptible de s'engager dans une rainure concave d'un élément de piédroit, de façon à constituer à constituer une articulation.

Comme habituellement, la cage d'armature est constituée de plusieurs sections parallèles 60, réparties sur la longueur de l'élément 6 et reliées entre elles par des filants 5, 5'.

Selon l'invention, chaque section d'armature 60 comprend deux fers longitudinaux 3, 3' constitués chacun d'un plat métallique qui, dans le cas du ferraillage d'un élément incurvé 6 est lui-même incurvé de façon que, après la pose, chaque plat 3, 3' soit parallèle à la face de parement correspondante 61, 62.

Dans chaque section 60, les deux plats 3, 3' sont reliés entre eux par une bande métallique ondulée 4 de maintien de leur écartement.

Comme le montre la figure 5, les bandes ondulées 4 constituant les étriers de deux sections successives peuvent avantageusement être décalées longitudinalement l'une par rapport à l'autre de façon à faciliter la pénétration du béton entre les divers éléments de la cage.

L'extrémité arrondie 63 de l'élément 6 peut être armée, simplement, par un fer longitudinal 64 à section plate ou ronde relié aux deux nappes de la cage par des tiges ou des bandes 65 soudées sur les extrémités, respectivement, de deux plats longitudinaux 3, 3' de chaque section de la cage.

Bien entendu, l'invention ne se limite pas aux détails du mode de réalisation qui vient d'être décrit à titre de simple exemple, mais couvre également les variantes restant dans le cadre de protection défini par les revendications.

Par exemple, les étriers de liaison entre les deux nappes d'armatures pourraient être constitués d'éléments séparés constitués de portions de bandes 41 ayant des extrémités coudées 42, 42' soudées respectivement sur les deux plats 3, 3' de chaque section de la cage, de la façon représentée sur la figure 8. L'écart entre ces éléments 41 ainsi que leur angle d'inclinaison (A) par rapport aux plats 3, 3' pourraient d'ailleurs varier en fonction de la position de l'étrier dans la pièce et du calcul des contraintes appliquées.

D'autre part, on a décrit l'invention dans son application à la réalisation d'éléments incurvés pour la réalisation de passages enterrés du type décrit dans le brevet EP-0.081.402 qui permettent d'utiliser des éléments particulièrement minces par rapport à leur portée. Mais l'invention pourrait également s'appliquer à d'autres types d'éléments tels que des poutres ou des dalles.

De même, si l'invention a été mise au point pour la réalisation d'éléments préfabriqués, l'utilisation d'une cage de ferraillage de ce type présenterait également des avantages dans le cas des pièces en béton moulées sur place.

Les signes de référence insérés après les caractéristiques techniques mentionnées dans les revendications, ont pour seul but de faciliter la compréhension de ces dernières et n'en limitent aucunement la portée.

**Revendications**

1. Cage de ferraillage pour un élément (1) en béton armé ayant deux faces de parement écartées de part et d'autre d'un axe neutre (10), entre lesquelles est noyée une cage de ferraillage (2) comprenant au moins deux armatures longitudinales, respectivement active (T) et passive (C), sensiblement parallèles, respectivement, aux deux faces de parement (11, 12) et constituées chacune d'une nappe de barres longitudinales ayant, en section transversale, une aire déterminée en fonction des efforts à supporter en service, et une armature transversale (E) constituée d'une pluralité d'étriers de liaison entre les barres opposées des deux nappes, respectivement active (T) et passive (C), **caractérisée par le fait que** chaque barre d'armature longitudinale est constituée d'un fer plat métallique (3, 3') à section rectangulaire ayant une largeur (I) et une épaisseur (e) déterminées de façon à assurer l'aire nécessaire à la résistance, avec deux faces planes, respectivement une face externe (32) tournée vers la face de parement (11, 12) correspondante et une face interne (31) tournée vers l'axe neutre et que les étriers de liaison (4) formant l'armature transversale (E) sont constitués d'éléments de bandes minces métalliques (41) s'étendant uniquement entre les faces internes (31, 31') des barres longitudinales opposées (3, 3'), les faces en regard des bandes plates constituant lesdites barres longitudinales (3, 3') et les étriers (4), étant appliquées et soudées l'une sur l'autre.

2. Cage de ferraillage selon la revendication 1, **caractérisée par le fait que** l'écartement entre les barres plates (3, 3') constituant les armatures longitudinales des deux nappes, respectivement active (T) et passive (C) est déterminé en fonction des efforts appliqués et que chaque face de parement (11, 12) est placée à une distance minimale d'enrobage (b) de la face externe (32, 32') de la barre longitudinale correspondante (3, 3'), de façon à donner à l'élément en béton (1) l'épaisseur juste nécessaire à la résistance.

3. Cage de ferraillage selon l'une des revendications 1 et 2, **caractérisée par le fait qu'**elle comprend au moins deux sections d'armatures (21, 22) centrées dans des plans (P) orthogonaux aux faces de parement (11, 12) de l'élément (1) et reliées par des barres de solidarisation (5), chaque section (21, 22) comprenant au moins deux barres plates longitudinales (3, 3') écartées l'une de l'autre et les barres de solidarisation (5) étant constitués de bandes métalliques transversales auxdites barres plates longitudinales (3, 3') et soudées sur les faces internes (31, 31') de celles-ci.

4. Cage de ferraillage selon l'une des revendications précédentes, **caractérisée par le fait que** les étriers de liaison entre deux barres plates longitudinales opposées (3, 3') forment au moins une bande ondulée (4), soudée alternativement sur les faces internes (31, 31') desdites barres plates.

5. Cage de ferraillage selon la revendication 4, **caractérisée par le fait que** les bandes ondulées (4) constituant les étriers de deux sections voisines sont décalées longitudinalement de façon à faciliter la pénétration du béton entre les divers éléments de la cage.

6. Cage de ferraillage selon l'une des revendications 1 à 3, **caractérisée par le fait que** les étriers de liaison entre deux barres plates longitudinales opposées (3, 3'), forment une série d'éléments séparés (41) constitués chacun d'une portion de bande ayant deux extrémités coudées (42, 42') soudées respectivement sur les faces internes (31, 31') des deux barres plates longitudinales (3, 3').

7. Cage de ferraillage selon l'une des revendications précédentes, **caractérisée par le fait que**, l'élément en béton armé (1) ayant deux faces (11, 12) incurvées en forme de secteur sensiblement cylindrique, les barres plates longitudinales (3, 3') de chaque nappe d'armatures (T, C) sont incurvées de façon que leurs faces externes (32, 32') soient parallèles, respectivement, aux faces de parement correspondantes (11, 12) de l'élément (1).

8. Élément en béton armé moulé, comprenant une cage de ferraillage (2) noyée entre deux faces de parement (11, 12) écartées l'une de l'autre, **caractérisé par le fait que** la cage de ferraillage (2) est réalisée selon l'une des revendications précédentes.

9. Élément en béton armé selon la revendication 8 comprenant deux faces de parement, respectivement active (11) et passive (12), de part et d'autre d'un axe neutre (10) et une cage d'armature (2) comprenant au moins une barre longitudinale active, **caractérisé par le fait que** chaque barre longitudinale active est constituée d'un plat (3) ayant une face externe (32) parallèle à la face de parement active (11) et que l'épaisseur (H) de l'élément correspondant à la distance entre les faces de parement, respectivement active (11) et passive (12) est égale à :

$$H = h + b + e/2,$$

    - h étant la distance, calculée en fonction des efforts appliqués entre la face de parement passive (12) et le centre de gravité du plat longitudinal actif (3),
    - b étant une distance minimale d'enrobage entre la face externe (32) du plat longitudinal (3) et la face de parement active (11) de l'élément (1)
    - et (e) étant l'épaisseur du plat longitudinal (3).

10. Procédé de réalisation d'un élément moulé en béton armé ayant deux faces de parement écartées (11, 12), entre lesquelles est noyée une cage de ferraillage (2) comprenant au moins deux nappes d'armatures longitudinales (T, C) sensiblement parallèles, respectivement, aux deux faces de parement (11, 12) et reliées entre elles par une armature transversale (4) constituée d'une pluralité d'étriers de liaison entre les barres opposées des deux nappes, procédé dans lequel on détermine au préalable, en fonction des efforts à supporter, le positionnement des barres d'armatures longitudinales, respectivement actives (3) et passives (3'), de part et d'autre d'un axe neutre (10), leur aire en section transversale et le profil des armatures transversales, on réalise une telle cage de ferraillage que l'on place dans un moule définissant les faces de parement (11, 12), on coule le béton et, après la prise, on démoule l'élément ainsi réalisé,
**caractérisé par le fait que**, pour réaliser les armatures longitudinales, on utilise des barres plates métalliques (3, 3') à section rectangulaire ayant une largeur (l) et une épaisseur (e) déterminées de façon à assurer l'aire nécessaire à la résistance, on positionne lesdites barres plates (3, 3') de la façon prévue pour les armatures, respectivement active et passive et on les relie entre elles par une armature transversale (4) comprenant une pluralité d'éléments de bande mince métallique (41) s'étendant uniquement entre les faces internes (31, 31'), tournées l'une vers l'autre, desdites barres plates (3, 3'), les faces en regard desdits étriers en bandes minces et des barres plates (3, 3') étant appliquées et soudées l'une sur l'autre, et que la cage de ferraillage (2) ainsi formée est placée dans un moule définissant les faces de parement (11, 12) dont l'écartement est déterminé de façon à donner à l'élément moulé l'épaisseur juste nécessaire pour maintenir une distance minimale d'enrobage (b) entre la face externe (32, 32') de chaque barre plate longitudinale (3, 3') et la face de parement correspondante (11, 12).

**Claims**

1. A reinforcing cage for an armoured concrete element (1) with two facings spaced apart from one another on either side of a neutral axis (10), between which a reinforcing cage (2) is embedded, comprising at least two longitudinal armourings, respectively active (T) and passive (C), substantially parallel, respectively to both facings (11, 12) and each made of a pool of longitudinal bars having in transversal section a determined area in relation to the loads to sustain in operation, and a transverse armouring (E) made of a plurality of linking stirrups between the opposed bars of the two pools, respectively active (T) and passive (C),
**characterised in that** each longitudinal armouring bar consists of a flat iron metal bar (3, 3') with rectangular section whose width (1) and thickness (e) are determined in order to provide the area necessary to provide the strength required, with two plane faces, respectively an external face (32) turned toward the corresponding facing (11, 12) and an internal face (31) turned toward the neutral axis, and **in that** the linking stirrups (4) making the transversal armouring (E) are made of elements of thin metallic bands (41) only extending between the internal faces (31, 31') of opposed longitudinal bars (3, 3'), facing faces of flat bands constituting said longitudinal bars (3, 3') and the stirrups (4), being applied and welded on one another.

**2.** A reinforcing cage according to claim 1, **characterised in that** the spacing between the flat bars (3, 3') forming the longitudinal armourings of the two pools, respectively active (T) and passive (C), is determined in relation to the loads applied and **in that** each facing (11, 12) is placed at a minimum encasing distance (b) from the external face (32, 32') of the corresponding longitudinal bar (3, 3'), in order to provide the concrete element (1) with the thickness just necessary to provide the strength required.

**3.** A reinforcing cage according to one of the claims 1 and 2, **characterised in that** it comprises at least two armouring sections (21, 22) centred on planes (P) at right-angle to the facings (11, 12) of the element (1) and connected by joining bars (5), each section (21, 22) comprising at least two longitudinal flat bars (3, 3') spaced from one another and the joining bars (5) consisting of metal bands transverse to the said longitudinal flat bars (3, 3') and welded to the internal faces (31, 31') of the said flat bars,

**4.** A reinforcing cage according to one of the previous claims, **characterized in that** the linking stirrups between two opposed longitudinal flat bars (3, 3') form at least one undulated band (4), welded alternately on the internal faces (31, 31') of the said flat bars.

**5.** A reinforcing cage according to the claim 4, **characterised in that** the undulated bands (4) constituting the stirrups of two neighbouring parts are shifted longitudinally in order to facilitate the penetration of the concrete between the various elements of the cage.

**6.** A reinforcing cage according to one of the claims 1 to 3 **characterised in that** the linking stirrups between two opposed longitudinal flat bars (3, 3') form a series of distinct elements (41), each composed of a portion of band with two bent ends (42, 42') welded respectively on the internal faces (31, 31') of both longitudinal flat bars (3, 3').

**7.** A reinforcing cage according to one of the previous claims, **characterised in that**, the element made of armoured concrete (1) having two substantially curved faces (11, 12) in the shape of sensibly cylindrical sector, the longitudinal flat bars (3, 3') of each armouring pool (T, C) are curved so that their external faces (32, 32') are parallel, respectively to the corresponding facings (11, 12) of the element (1).

**8.** An element made of moulded armoured concrete, comprising a reinforcing cage (2) embedded between two facings (11, 12) spaced from one another, **characterised in that** the reinforcing cage (2) is realised according to one of the previous claims.

**9.** An element made of armoured concrete according to claim 8 comprising two facings, respectively active (11) and passive (12), on either side of a neutral axis (10) and a reinforcing cage (2) comprising at least one active longitudinal bar, **characterised in that** each active longitudinal bar is composed of a flat bar (3) with an external face (32) parallel to the active facing (11) and **in that** the thickness (H) of the element corresponding to the distance between the facings, respectively active (11) and passive (12), is equal to:

$$H = h + b + e/2,$$

- h being the distance, calculated in relation to the loads applied between the passive facing (12) and the centre of gravity of the active longitudinal flat bar (3),
- b being a minimum encasing distance between the external face (32) of the longitudinal flat bar (3) and the active facing (11) of the element (1)
- and e being the thickness of the longitudinal flat bar (3).

**10.** A method of realisation of an element made of moulded armoured concrete with two facings (11, 12) spaced apart from one another, between which a reinforcing cage (2) is embedded, comprising at least two longitudinal armouring pools, (T, C), substantially parallel, respectively to both facings (11, 12) and connected together by a transverse armouring (4), composed of a plurality of linking stirrups between the opposed bars of the two pools, a method in which the positioning of the longitudinal armouring bars, respectively active (3) and passive (3'), on either side of a neutral axis (10), their area in cross section, and the profile of the transverse armourings are firstly determined in relation to the loads to sustain, such a reinforcing cage is built, then placed in a mould delineating the facings (11, 12), concrete is cast and, after setting, the element thus realised is removed from the mould,
**characterised in that**, in order to realise the longitudinal armourings, metal flat bars (3, 3') with rectangular section are used, with width (l) and thickness (e) determined in order to form the area necessary to provide the strength required, whereas the said flat bars (3, 3') are positioned as foreseen for the armourings, respectively active and passive, and connected together by a transverse armouring (4) comprising a plurality of elements of thin metallic band (41) only extending between the internal faces (31, 31'), facing each other, of said flat bars (3, 3'), facing faces of said thin bands stirrups and of the flat bars (3, 3') being applied and welded on one another, whereas the reinforcing cage (2) thus formed is then placed in a mould delineating the facings (11, 12) whose spacing is determined in order to confer the moulded element the thickness just necessary to maintain a minimum encasing distance (b) between the external face (32, 32') of each longitudinal flat bar (3, 3') and the corresponding facing (11, 12).

**Patentansprüche**

1. Armierungskorb für ein Stahlbetonelement (1), mit zwei Verblendungsflächen, die beidseitig durch eine Mittelachse (10) voneinander getrennt sind und zwischen denen ein Armierungskorb (2) eingebettet ist, der mindestens zwei aktive (T) bzw. passive (C), im Wesentlichen parallele Längsbewehrungen aufweist, die jeweils an den zwei Verblendungsflächen (11,12) angeordnet sind und jeweils aus einer Lage von Längsstreben bestehen, weiche im Querschnitt eine Fläche aufweisen, die als Funktion der bei Betrieb aufzunehmenden Belastungen bestimmt ist, und der eine Querbewehrung (E) aufweist, die aus mehreren Verbindungsbügeln zwischen den einander gegenüberliegenden Streben der beiden Lagen besteht, und zwar den aktiven (T) und passiven (C), **dadurch gekennzeichnet, dass** jede Strebe der Längsbewehrung aus einer flachen Metallplatte (3,3') mit rechteckigem Querschnitt besteht, die eine Breite (l) und eine Dicke (e) hat, welche derart vorgesehen sind, dass sie die für die Belastbarkeit erforderliche Fläche bilden, und welche zwei ebene Flächen aufweisen, und zwar eine Außenfläche (32), die der entsprechenden Verblendungsfläche (11,12) zugewandt ist, und eine Innenfläche (31), die der Mittelachse zugewandt ist, und dass die Verbindungsbügel (4), weiche die Querbewehrung (E) bilden, aus dünnen Metallbandelementen (41) bestehen, die sich ausschließlich zwischen den Innenflächen (31,31') der einander gegenüberliegenden Längsstreben (3,3') erstrecken, wobei die gegenüberliegenden Flächen der flachen Bänder, die die Längsstreben (3,3') bilden, und die Bügel (4) aufeinander angeordnet und miteinander verschweißt sind.

2. Armierungskorb nach Anspruch 1, **dadurch gekennzeichnet, dass** der Abstand zwischen den flachen Streben (3,3'), welche die aktiven (T) bzw. passiven (C) Längsbewehrungen der beiden Lagen bilden, als Funktion der aufgebrachten Kräfte vorgesehen ist und dass jede Verblendungsfläche (11,12) mit einem minimalen Überdeckungsabstand (b) von der Außenfläche (32,32') der entsprechenden Längsstrebe (3,3') derart angeordnet ist, dass dem Betonelement (1) die für die Belastbarkeit korrekte Dicke verliehen wird.

3. Armierungskorb nach einem der Ansprüche 1 und 2, **dadurch gekennzeichnet, dass** er mindestens zwei Bewehrungsabschnitte (21,22) aufweist, die in rechtwinklig zu den Verblendungsflächen (11,12) des Elements (1) verlaufenden Ebenen (P) zentriert sind und mittels Verbindungsstreben (5) befestigt sind, wobei jeder Abschnitt (21,22) mindestens zwei voneinander beabstandete, flache Längsstreben (3,3') aufweist und die Verbindungsstreben (5) aus quer zu den flachen Längsstreben (3,3') verlaufenden Metallbändern bestehen und mit deren Innenflächen (31,31') verschweißt sind.

4. Armierungskorb nach einem der vorhergehenden Ansprüche, **dadurch gekennzeichnet, dass** die Verbindungsbügel zwischen zwei einander gegenüberliegenden flachen Längsstreben (3,3') mindestens ein wellenlinienförmiges Band (4) bilden, das alternierend mit den Innenflächen (31,31') der flachen Streben verschweißt ist.

5. Armierungskorb nach Anspruch 4, **dadurch gekennzeichnet, dass** die wellenlinienförmigen Bänder (4), welche die Bügel zweier benachbarter Abschnitte bilden, in Längsrichtung derart versetzt sind, dass sie das Eindringen des Betons zwischen den verschiedenen Elementen des Käfigs erleichtern.

6. Armierungskorb nach einem der Ansprüche 1 bis 3, **dadurch gekennzeichnet, dass** die Verbindungsbügel zwischen zwei einander gegenüberliegenden flachen Längsstreben (3,3') eine Abfolge getrennter Elemente (41) bilden, die jeweils aus einem Band-Teil mit zwei gekrümmten Enden (42,42') bestehen, welche jeweils mit den Innenflächen (31,31') der beiden flachen Längsstreben (3,3') verschweißt sind.

7. Armierungskorb nach einem der vorhergehenden Ansprüche, **dadurch gekennzeichnet, dass** das Stahlbetonelement (1) zwei Flächen (11,12) aufweist, die in Form eines im Wesentlichen zylindrischen Abschnitts gekrümmt sind, wobei die flachen Längsstreben (3,3') jeder Bewehrungslage (T,C) derart gekrümmt sind, dass ihre Außenflächen (32,32") jeweils parallel zu den entsprechenden Verblendungsflächen (11,12) des Elements (1) verlaufen.

8. Stahlbetonelement mit einem Armierungskorb (2), der zwischen zwei voneinander beabstandeten Verblendungsflächen (11,12) eingebettet ist, **dadurch gekennzeichnet, dass** der Armierungskorb (2) gemäß einem der vorhergehenden Ansprüche ausgebildet ist.

**9.** Stahlbetonelement nach Anspruch 8, mit zwei aktiven (11) bzw. passiven (12) Verblendungsflächen zu beiden Seiten einer Mittelachse (10), und mit einem Armierungskorb (2), der mindestens eine aktive Längsstrebe aufweist, **dadurch gekennzeichnet, dass** jede aktive Längsstrebe aus einer Platte (3) mit einer parallel zu der aktiven Verbidung (11) verlaufenden Außenfläche (32) besteht und dass die Dicke (H) des entsprechenden Elements, das im Abstand zwischen den aktiven (11) bzw. passiven (12) Verblendungsflächen angeordnet ist, gleich

$$H = h + b + e/2$$

ist, wobei

- h der als Funktion der aufgebrachten Kräfte berechnete Abstand zwischen der passiven Verblendungsfläche (12) und dem Schwerpunkt der aktiven Längsplatte (3) ist,
- b ein minimaler Überdeckungsabstand zwischen der Außenfläche (32) der Längsplatte (3) und der aktiven Verblendungsfläche (11) des Elements (1) ist,
- und (e) die Dicke der Längsplatte (3) ist.

**10.** Verfahren zur Realisierung eines Formelements aus Stahlbeton, das zwei voneinander beabstandete Verblendungsflächen (11,12) aufweist, zwischen denen ein Armierungskorb (2) eingebettet ist, der mindestens zwei im Wesentlichen parallele Lagen von Längsbewehrungen (T,C) aufweist, die jeweils an den zwei Verblendungsflächen (11,12) angeordnet sind und mittels einer Querbewehrung (4) miteinander verbunden sind, die aus mehreren Verbindungsbügeln zwischen den einander gegenüberliegenden Streben der beiden Lagen besteht, wobei bei dem Verfahren als Funktion der aufzunehmenden Kräfte die Positionierung der beidseitig einer Mittelachse (10) angeordneten aktiven (3) bzw. passiven (3') längsverlaufenden Bewehrungsstreben, ihre Querschnittsfläche und das Profil der Querbewehrungen im Voraus bestimmt werden, wobei ein derartiger Armierungskorb gebildet wird, dass dieser in einer die Verblendungsflächen (11,12) definierenden Form platziert werden kann, der Beton gegossen wird und nach dem Erhärten das in dieser Weise gebildete Element aus der Form herausgenommen wird, **dadurch gekennzeichnet, dass** zur Realisierung der Längsbewehrungen flache Metallplatten (3,3') mit rechteckigem Querschnitt verwendet werden, die eine Breite (l) und eine Dicke (e) haben, welche derart vorgesehen sind, dass sie die für die Belastbarkeit erforderliche Fläche bilden, die flachen Streben (3,3') in der für die aktiven bzw. passiven Bewehrungen vorgesehenen Weise positioniert werden und mittels einer Querbewehrung (4) miteinander verbunden werden, die mehrere dünne Metallbandelemente (41) aufweist, welche sich ausschließlich zwischen den einander zugewandten Innenflächen (31,31') der flachen Streben (3,3') erstrecken, wobei die Flächen, die den aus dünnen Bändern gebildeten Bügeln gegenüberliegen, und die Längsstreben (3,3') aufeinander angeordnet und miteinander verschweißt sind, und dass der in dieser Weise gebildete Armierungskorb (2) in einer Form platziert wird, welche die Verblendungsflächen (11,12) definiert, deren Abstand derart definiert vorgesehen ist, dass dem Formelement die exakte Dikke verliehen wird, um einen minimalen Überdekkungsabstand (b) zwischen der Außenfläche (32,32') jeder Längsplatte (3,3') und der entsprechenden Verblendungsfläche (11,12) aufrechtzuhalten.

FIG.1

FIG.2

FIG.3

FIG.4

FIG.5

FIG.6

FIG.7

FIG.8

# EP 1 191 163 B1

## RÉFÉRENCES CITÉES DANS LA DESCRIPTION

**Documents brevets cités dans la description**

- EP 0081402 A
- FR 2708969 A